# EUROPÄISCHE PATENTSCHRIFT

(11) **EP 3 975 358 B1**
(45) Veröffentlichungstag und Bekanntmachung des Hinweises auf die Patenterteilung: **19.07.2023**
(21) Anmeldenummer: 21208424.8
(22) Anmeldetag: 01.03.2017
(51) Int. Cl.: H02G 3/04, H02G 3/00, H02G 3/32

(54) **BRIDE ZUR HALTERUNG VON KABELN, VORZUGSWEISE HOCHSPANNUNGS-KABEL**
BRACKET FOR HOLDING CABLES, PREFERABLY HIGHVOLTAGE CABLES
SUPPORT POUR PORTER DES CABLES, DES CÂBLES PRÉFÉRABLES À HAUTE TENSION

(30) Priorität: 09.03.2016 CH 3132016; 26.05.2016 CH 6792016
(43) Veröffentlichungstag der Anmeldung: 30.03.2022
(62) Teilanmeldung aus: 17158748.8
(73) Patentinhaber: TRESCO AG, 9404 Rorschacherberg (CH)
(72) Erfinder: ENZLER, Christian, 9404 Rorschacherberg (CH); ENZLER, Philipp, 9425 Thal (CH)
(74) Vertreter: Luchs, Willi

(56) Entgegenhaltungen:
- EP-A1- 2 184 824
- DE-A1- 2 500 925
- DE-U1- 29 507 553

## Beschreibung

Die Erfindung bezieht sich auf eine Bride zur Halterung von Kabeln, vorzugsweise Hochspannungs-Kabel, welche einen länglichen Spannkörper für die Aufnahme von Kabeln umfasst.

Derartige Briden werden bekanntlich als Spannvorrichtungen verwendet, welchen die Aufgabe zusteht, die Kabel von den auf sie wirkenden Zugspannungen zu entlasten. In der Praxis werden die Kabel in Bündeln von normalerweise drei nebeneinander verlaufenden Einzelkabeln eingezogen, wobei jedes Kabel separat mit einzeln Briden gesichert wird. Das hat zur Folge, dass die Kabel bei der Montage auseinandergefahren werden müssen, so dass ein grösserer Montageplatz und auch zusätzliche Mehrarbeit nötig sind.

Bei einer Einrichtung gemäss der Druckschrift DE 25 00 925 A1 zu einer gruppenweise Bündeldung und Befestigung von Einleiterkabeln in einem Stromnetz für Hochspannungsübertragung grosser Energieleistungen ist eine Kabelgruppe zwischen mindestens zwei mit entsprechenden, in Kabellängsrichtung verlaufenden, dem Kabelumfang angepassten Ausnehmungen versehenen Klemmschalen eingeklemmt. Mindestens ein aufspannbares Halteelement aus Metall hält die Klemmschalen zusammen.

Zudem sind Befestigungsmittel für das Fixieren der Einrichtung mit samt der Kabelgruppe an einem Kabelleiter oder einem sonstigen Trägerelement vorhanden.

Gemäss der Druckschrift DE 295 07 553 U1 ist eine Scheibenschelle geoffenbart, bei der ein Oberteil und ein Unterteil mit entsprechenden Ausbuchtungen vorgesehen sind, in welche maximal drei Kabel einsetzbar sind. Es sind dabei Scheiben in den Ausbuchtungen vorgesehen, die sich in letztere erstrecken und ein Schliessen des Durchgangs ermöglichen, um die Anzahl und Durchmesser der hindurchzuführenden Kabel abzustimmen.

Bei einem Rohrpaket gemäss der Druckschrift EP 2 184 824 A1 sind die Rohre längs verlaufend zueinander mittels zumindest eines zwischengeschalteten Abstandhalters verbindungsfrei zusammengefasst, wobei eine aussenumfangsseitige Umreifung vorgesehen ist. Der Abstandhalter füllt dabei einen zwischen den Rohren verbleibenden Zwischenraum vollständig aus.

Der Erfindung liegt demgegenüber die Aufgabe zugrunde, diese Nachteile zu vermieden und eine Bride der eingangs genannten Art zu schaffen, welche den Einbau unter ungünstigen Platzverhältnissen ermöglicht und eine Einsparung des Montageaufwandes ermöglicht.

Diese Aufgabe ist erfindungsgemäss durch die Merkmale des Anspruchs 1 gelöst.

Die erfindungsgemässe Bride erhält dadurch einen kompakten, platzsparenden Aufbau, der gleichzeitig eine vollkommen zugfeste Fixierung der Energiekabel gewährleistet.

Sie ermöglicht zudem die Zugentlastung von drei Energiekabeln auf einmal sowie beträchtliche Erleichterung der Montagearbeit, weil die Kabel nicht mehr auseinandergefahren werden müssen.

Aufgrund dieser Vorteile ist die Bride besonders geeignet zum gleichzeitigen Einziehen von Hochspannungskabeln in Rohrstrassen mit einem Kabelschutzrohr zur Aufnahme von drei Kabeln.

Die Erfindung sieht ferner vor, dass der Spannkörper der Bride im Querschnitt ein Dreieck bildet, wobei der Mittelteil einerseits mit dem Unterteil und andererseits mit dem Oberteil paarweise als Klemmbacken zum Fixieren der Energiekabel in den Durchführungskanälen des Spannkörpers wirken. Diese Anordnung erleichtert die Verlegung und Fixierung der drei Kabel, und hat zudem einen konstruktiv einfachen und robusten Aufbau, der die feste Fixierung der drei Kabel sicherstellt.

Es ist auch in diesem Sinne vorteilhaft, wenn die Durchführungskanäle des Spannkörpers hälftig in dem Klemmbacken des jeweiligen Klemmbackenpaars ausgespart sind, wobei sie in Hinblick auf den in der Regel runden Querschnitt der Energiekabel zweckmässigerweise einen kreisförmige Querschnitt aufweisen, dessen Durchmesser dem der einzuziehenden Kabel angepasst ist.

Es ist auch zum Schutz der Kabelumhüllung von Vorteil, wenn die Durchführungskanäle im Bereich der Klemmbacken mit einer dem Kanalquerschnitt angepassten Gummieinlage oder dergleichen versehen sind.

Die Erfindung sieht ebenfalls vor, dass die Klemmbacken paarweise durch Befestigungsmittel gegeneinander festspannbar sind, die reihenförmig beidseitig der Klemmbacken in seitlich ausstehenden Ansätzen der Klemmbacken geführt sind. Das ermöglicht die Anordnung einer Vielzahl von Befestigungsmitteln auf beiden Seiten der Klemmbacken, die eine gleichmässig feste Fixierung der Energiekabel jeweils über die gesamte oder über einen Teil der Baulänge der Bride gewährleistet.

Es ist konstruktiv und montagetechnisch vorteilhaft, wenn das untere Klemmbackenpaar zwei Durchführungskanäle enthält und seine Klemmbacken zusätzlich mit einer zwischen den beiden Durchführungskanälen angeordneten Reihe Spannschrauben festspannbar sind.

Der Spannkörper kann auf einem Stützträger oder Fundament mit Befestigungsschrauben verankert werden, die vorzugsweise zwischen den äusseren Spannschrauben des unteren Klemmbackenpaars geführt sind. Diese Anordnung ermöglicht die Befestigung der Bride auf dem dafür vorgesehenen Tragkörper unabhängig davon, ob die Kabel bereits in den Durchführungskanälen der Bride eingelegt sind.

Die Erfindung ist nachfolgend anhand eines Ausführungsbeispiels unter Bezugnahme auf die Zeichnung näher beschreiben. Es zeigen:
- Fig. 1: den Zusammenbau einer Bride, welche nicht unter den Wortlaut der Ansprüche fällt, wird aber als das Verständnis der Erfindung erleichternd angesehen, perspektivisch dargestellt,
- Fig. 2: einen Schnitt durch die Bride nach Fig. 1,
- Fig. 3: einen Querschnitt der erfindungsgemässen Bride (gemäss der Linie I - I nach Fig. 4), und
- Fig. 4: eine Seitenansicht der Bride nach Fig. 3.

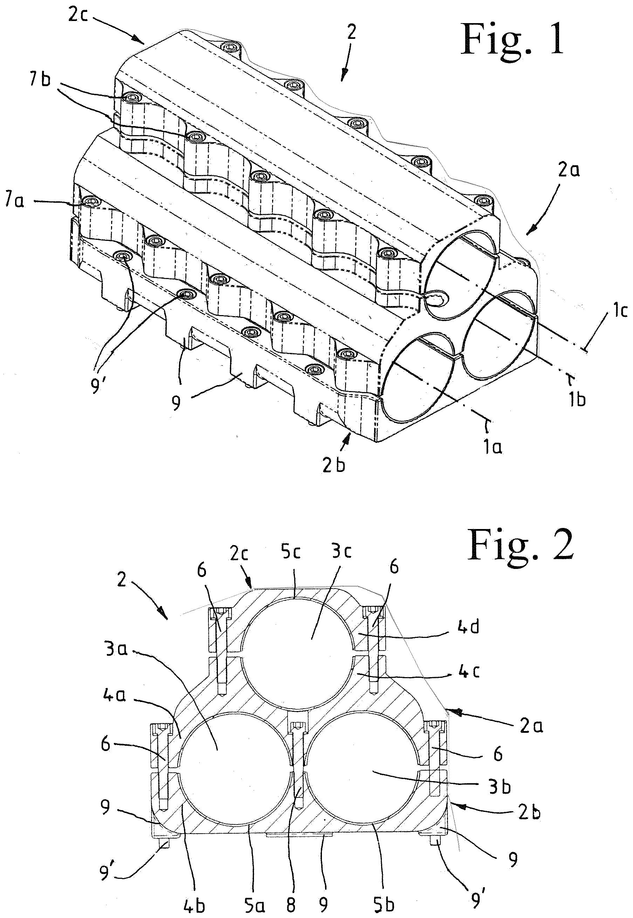

Die Bride gemäss Fig. 1 und Fig. 2, die nicht Gegenstand der Ansprüche bzw. der Erfindung ist, dient zur Zugentlastung von drei Energiekabeln entlang der jeweils festgelegten Stromstrasse. Sie ist insbesondere für Hochspannungskabel von bis zu 200 mm Durchmesser sowohl als Schichtenmantelkabel wie auch als Kupfer- und Aluwellmantelkabel, armierte und nicht armierte Kabel, Kunststoff, Öl- und Gaskabel oder als Spezialkabel mit Glasfasereinsätzen verwendbar. Die drei Energiekabel sind mit ihren Mittelachsen 1a, 1b, 1c symbolisch angedeutet.

Wie aus Fig. 1 ersichtlich ist, weist die Bride einen länglichen Spannkörper 2 auf, der mit drei im Querschnitt dreieckig angeordneten Durchführungskanälen 3a, 3b, 3c für die Energiekabel 1a bis 1c versehen ist. Der Spannkörper 2 ist im Querschnitt dreiteilig ausgebildet, wobei der Mittelteil 2a mit dem Unterteil 2b und dem Oberteil 2c je ein Paar Klemmbacken 4a, 4b bzw. 4c, 4d zum Fixieren der Energiekabel 1a bis 1c in den Durchführungskanälen 3a bis 3c des Spannkörpers 2 bilden. Diese weisen einen kreisförmigen Querschnitt auf, dessen Durchmesser dem der jeweils einzuziehendem Energiekabel angepasst ist. Sie sind hälftig in den Klemmbacken der beiden Klemmbackenpaare 4a, 4b bzw. 4c, 4d ausgespart. Zudem sind sie im Bereich der Klemmbacken mit Einlagen, wie Gummieinlagen 5a, 5b, 5c zum Schutz der Kabelummantelung versehen.

Zum Fixieren der Energiekabel 1a bis 1c in der Bride sind die Klemmbacken 4a bis 4d paarweise gegeneinander mit Befestigungsmitteln, zum Beispiel mit zylindrischen Spannschrauben 6 festspannbar, die reihenweise beidseitig der Klemmbacken mit seitlich vorstehenden Ansätzen 7a, 7b der Klemmbacken geführt sind. Dadurch den annähernd dreieckigen Querschnitt des Spannkörpers 2 sind die Schraubenreihen des einen Klemmbackenpaars 4a, 4b unabhängig von denen des anderen Klemmbackenpaars 4c, 4d frei zugänglich.

Beim erläuterten Ausführungsbeispiel sind die Durchführungskanäle 3a bis 3c so angeordnet, dass das untere Klemmbackenpaar 4a, 4b zwei der drei Durchführungskanäle aufnehmen kann. Zum Fixieren der beiden Energiekabel 1a und 1b ist das Klemmbackenpaar 4a, 4b zusätzlich mit einer dazwischen angeordneten Reihe Spannschrauben 8 festspannbar, die nach Entfernung der Oberteils 2c des Spannkörpers 2 zugänglich sind.

Im Unterteil 2b des Spannkörpers sind Ansätze 9 zum Abstützen der Bride auf einem Fundament oder Stützträger vorgesehen, und der Spannkörper ist auf ihm mit Befestigungsmitteln, wie Schrauben 9', befestigbar, die beidseitig zwischen den äusseren Spannschrauben 6 des unteren Klemmbackenpaars 4a, 4b geführt sind.

Die längliche Ausbildung des Spannkörpers 2 und die halbkreisförmigen Aussparungen für die Durchführungskanäle 3a bis 3c in den Klemmbacken 4a bis 4d tragen dazu bei, dass die Kabel 1a bis 1c in der Bride gleichmässig und vollkommen fest fixiert sind.

Die vorgeschlagene Anordnung der Spannschrauben trägt auch dazu bei, dass sich die erfindungsgemässe Bride durch einen sehr kompakten und platzsparenden Aufbau auszeichnet, wobei die vorgeschlagene Anordnung der Spannschrauben 6 die Betätigung der beiden Klemmbackenpaare 4a, 4b und 4c unabhängig voneinander ermöglicht. Ausserdem wird die Montagearbeit durch die freie Zugangsmöglichkeit der Spannschrauben sehr erleichtert.

Die Durchführungskanäle 3a bis 3d sind mit einem kreisförmigen Querschnitt versehen. In besonderen Fällen können sie aber auch ohne weiteres einen beispielweise wellig oder polygonal profilierten Querschnitt aufweisen, wenn sie damit eine bessere Fixierung der einzuziehenden Kabel gewährleisten.

Der Durchmesser der drei Durchführungskanäle 3a, 3b, 3c ist gleich bemessen veranschaulicht. Die erfindungsgemässe Bride kann aber auch ohne weiteres mit Durchführungskanälen unterschiedlichen Durchmessers versehen sein.

Als Befestigungsmittel könnten anstelle von Spannschrauben 6 auch Spannbriden oder ähnliches verwendet werden.

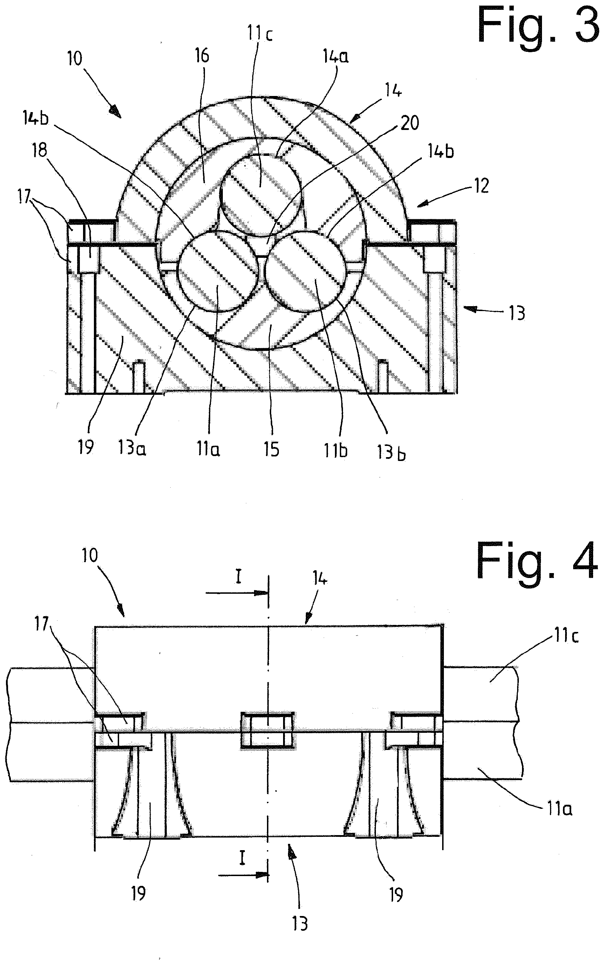

Die Bride 10 gemäss Fig. 3 und Fig. 4 dient zur Zugentlastung von drei Energiekabeln 11a, 11b, 11c. Sie kann auf einem Stützträger oder Fundament mit Befestigungsschrauben verankert werden, die vorzugsweise zwischen den äusseren Spannschrauben des unteren Klemmbackenpaars geführt sind. Diese Anordnung ermöglicht die Befestigung der Bride auf dem dafür vorgesehenen Tragkörper unabhängig davon, ob die Kabel bereits in den Durchführungskanälen der Bride eingelegt sind oder nicht.

Wie aus Fig. 3 ersichtlich ist, weist die Bride einen länglichen Spannkörper 12 auf, der mit drei im Querschnitt dreieckig angeordneten Durchführungskanälen 13a, 13b, 13c für die Energiekabel 11a, 11b, 11c versehen ist.

Der Spannkörper 12 ist im Querschnitt mit einem Unterteil 13 und einem Oberteil 14 mit je einer Klemmbacke 15, 16 zum Fixieren der Energiekabel 11a, 11b, 11c in den Durchführungskanälen 13a, 13b, 13c zusammengesetzt. Letztere weisen einen kreisförmigen Querschnitt auf, dessen Durchmesser demjenigen der jeweils zu fixierenden Energiekabel angepasst ist, d.h. annähernd den gleichen Durchmesser aufweisen. Sie sind hälftig in den Klemmbacken 15, 16 ausgespart. Zudem können sie mit Einlagen, wie Gummieinlagen zum Schutz der Kabelummantelung versehen sein.

Zum Fixieren der Energiekabel 11a, 11b, 11c in der Bride 10 sind die Klemmbacken 15, 16 gegeneinander mit Befestigungsmitteln, zum Beispiel mit zylindrischen Spannschrauben 18 festspannbar, die beidseitig der Klemmbacken mit seitlich vorstehenden Ansätzen 17 der Klemmbacken geführt sind.

Im Unterteil 13 des Spannkörpers 12 sind Ansätze 19 zum Abstützen der Bride 10 auf einem Fundament, Stützträger oder dergleichen vorgesehen, und der Spannkörper ist auf ihm befestigbar.

Die längliche Ausbildung des Spannkörpers 12 und die halbkreisförmigen Aussparungen für die Durchführungskanäle 13a, 13b, 13c in den Klemmbacken 15, 16 tragen dazu bei, dass die Kabel 11a, 11b, 11c in der Bride gleichmässig und vollkommen fest fixiert sind. Zweckmässigerweise sind der Klemmbacke 15 des Unterteils 13 zwei Durchführungskanäle 13a, 13b, indes der Klemmbacke 16 des Oberteils 14 der dritte Durchführungskanal 14a zugeordnet.

Erfindungsgemäss ist die Klemmbacke 16 des Oberteils 14 im Querschnitt derart geformt, dass in seinem Zentrum der Durchführungskanal 14a für das obere Kabel 11c und an seiner Unterseite beidseitig neben diesem Durchführungskanal 14a je eine segmentförmige Spannfläche 14b für das Anpressen der beiden nebeneinander liegenden Kabel 11a, 11b in die untere Klemmbacke 15 vorgesehen ist.

Diese segmentförmigen Spannflächen 14b sind im Querschnitt betrachtet mit den Rundungen wie der Durchmesser der Kabel 11a, 11b annähernd gleich dimensioniert und sie erstrecken sich annähernd um einen Winkel von 90°. Die Klemmbacke 16 des Oberteils 14 ragt vorzugsweise in die Öffnung des Unterteils 13 und ist darin seitlich geführt.

Sehr vorteilhaft ist, wenn eine Längseinlage 20 zwischen den Klemmbacken 16 eingelegt wird, welche zwischen die drei Kabel 11a, 11b, 11c einlegbar ist und sich annähernd über die Länge der Bride 10 erstreckt. Diese Längseinlage 20 ist dabei so bemessen, dass die drei Kabel jeweils flächig bei ihr aufliegen und mittels der nebst den Spannflächen 14b ein zusätzlicher Anpressdruck auf die beiden nebeneinander liegenden Kabel 11a, 11b erzeugbar ist. Damit wird ein gleichmässiges Andrücken auf die drei Kabel beim Spannen des Oberteils auf den Unterteil bewirkt.

Im Prinzip könnte auch auf diese Längseinlage 20 verzichtet werden und es würde dann das Kabel 11c im Oberteil 14 direkt auf den unteren beiden Kabel 11a, 11b aufliegen und vorteilhaft im verspannten Zustand einen Druck auf diese ausüben.

Die vorgeschlagene Anordnung der Spannschrauben trägt auch dazu bei, dass die erfindungsgemässe Bride sich durch einen sehr kompakten und platzsparenden Aufbau auszeichnet.

Die Durchführungskanäle 13a, 13b, 13c sind mit einem kreisförmigen Querschnitt versehen.

Der Durchmesser der drei Durchführungskanäle 13a, 13b, 13c ist gleich bemessen veranschaulicht. Die erfindungsgemässe Bride kann aber auch ohne weiteres mit Durchführungskanälen unterschiedlichen Durchmessers versehen sein.

Die erfindungsgemässe Bride kann sowohl aus unterschiedlichen Metallen, wie Aluminium mit Chromstahlschrauben oder mit verzinkten Schrauben, oder auch aus Kunststoff, ebenfalls mit Chromstahlschrauben oder mit verzinkten Schrauben gefertigt werden. Ausserdem können der halbschalenförmige Unter- bzw. Oberteil 13, 14 und die zugehörigen Klemmbacken 15, 16 aus unterschiedlichen Materialien und entweder spanabhebend, gegossen oder als Kunststoffspritzguss, durch 3D-Herstellungsverfahren, als Verbundwerkstoffe und/oder aus Holzerzeugnissen hergestellt sein.

Die Erfindung ist mit den oben erläuterten Ausführungsbeispielen ausreichend dargetan. Sie liesse sich jedoch noch in anderen Varianten darstellen. Im Prinzip könnten auch zwei, vier oder noch mehr Durchführungskanäle vorgesehen sein, bei dem diese vorteilhaft je zwei übereinander angeordnet wären.

Die Klemmbacken könnten auch in den Unter- bzw. Oberteil 13, 14 eingearbeitet sein bzw. jeweils einstückig aus demselben Material bestehen.

## Patentansprüche

1. Bride zur Halterung von Kabeln, vorzugsweise Hochspannungs-Kabel, welche einen länglichen Spannkörper (12) für die Aufnahme von Kabeln (11a, 11b, 11c) umfasst, wobei der mit drei im Querschnitt ein Dreieck bildenden Durchführungskanälen (13a, 13b, 14a) für die Aufnahme der Kabel (11a, 11b, 11c) versehene längliche Spannkörper (12) wenigstens einen Unterteil (13) und einen Oberteil (14) aufweist, wobei im Unterteil (13) und im Oberteil (14) je eine Klemmbacke (15, 16) angeordnet ist, die paarweise zum Fixieren der Kabel (11a, 11b, 11c) in den Durchführungskanälen (13a, 13b, 14a) des Spannkörpers gebildet sind, wobei der Unterteil (13) und der Oberteil (14) mit den Klemmbacken (15, 16) mit beidseitig angeordneten Befestigungsmitteln, vorzugsweise Spannschrauben (18), gegeneinander festspannbar sind, die beidseitig der Klemmbacken mit seitlich vorstehenden Ansätzen (17) geführt sind, wobei die Durchführungskanäle (13a, 13b, 14a) hälftig und halbkreisförmig in den Klemmbacken des Klemmbackenpaars (15, 16) ausgespart sind, wobei der Klemmbacke (15) des Unterteils (13) zwei Durchführungskanäle (13a, 13b), indes der Klemmbacke (16) des Oberteils (14) der dritte Durchführungskanal (14a) zugeordnet ist, wobei die Klemmbacke (16) des Oberteils (14) vorzugsweise in die Öffnung des Unterteils (13) ragt und darin seitlich geführt ist.

2. Bride nach Anspruch 1, wobei die Klemmbacke (16) des Oberteils (14) im Querschnitt derart geformt ist, dass in seinem Zentrum der Durchführungskanal (14a) für das eine Kabel (11c) und an seiner Unterseite beidseitig neben diesem Durchführungskanal (14a) je eine segmentförmige Spannfläche (14b) für das Anpressen der beiden nebeneinander liegenden Kabel (11a, 11b) in die untere Klemmbacke (15) vorgesehen ist.

3. Bride nach Anspruch 1 oder 2, wobei eine Längseinlage (20) zwischen den Klemmbacken (15, 16) vorhanden ist, welche zwischen die drei Kabel (11a, 11b, 11c) einlegbar ist und mittels der nebst den Spannflächen (14b) ein zusätzlicher Anpressdruck auf die beiden nebeneinander liegenden Kabel (11a, 11b) erzeugbar ist.

4. Bride nach einem der vorhergehenden Ansprüche 1 bis 3, wobei der halbschalenförmige Unter- bzw. Oberteil (13, 14) und die zugehörigen Klemmbacken (15, 16) aus unterschiedlichen Materialien hergestellt sind.

5. Bride nach einem der vorhergehenden Ansprüche 1 bis 4, wobei die Durchführungskanäle (13a, 13b, 13c) mit jeweils einer dem Kanalquerschnitt angepassten Einlage zum Schutz der Kabelummantelung versehen sind.

6. Bride nach einem der vorhergehenden Ansprüche 1 bis 5, wobei im Unterteil (13) des Spannkörpers (12) Ansätze (19) zum Abstützen der Bride (10) auf einem Fundament, Stützträger oder dergleichen vorgesehen sind.

## Claims

1. Clamp for holding cables, preferably high-voltage cables, which comprises an elongated clamping body (12) for receiving cables (11a, 11b, 11c), whereby the elongated clamping body (12) is provided with at least three ducts (13a, 13b, 14a) for receiving the cables (11a, 11b, 11c) forming a triangular in cross section and having at least a lower part (13) and an upper part (14), whereby a clamping jaw (15, 16) is arranged in each the lower part (13) and the upper part (14), which are pairwise formed for fixing the cables (11a, 11b, 11c) in the ducts (13a, 13b, 14a) of the clamping body, whereby the lower part (13) and the upper part (14) with the clamping jaws (15, 16) can be clamped against one another with on both sides arranged fastening means, preferably clamping screws (18), which are guided on both sides of the clamping jaws with laterally protruding shoulders (17), whereby the ducts (13a, 13b, 14a) are recessed as half and half circular formed in the clamping jaws of the respective clamping jaw pair (15, 16), whereby two ducts (13a, 13b) are assigned to the clamping jaw (15) of the lower part (13), meanwhile the third duct (14a) is assigned to the clamping jaw (16) of the upper part (14), wherein the clamping jaw (16) of the upper part (14) preferably projects into the opening of the lower part (13) and is therein guided on the side.

2. Clamp according to claim 1,whereby the clamping jaw (16) of the upper part (14) is shaped in cross-section in such a way that in its centre the duct (14a) for the one cable (11c) and on its underside on both sides next to this duct (14a) each a segment-shaped clamping surface (14b) is provided for the pressing the two cables (11a, 11b) lying next to one another into the lower clamping jaw (15).

3. Clamp according to claim 1 or 2, whereby a longitudinal insert (20) is provided between the clamping jaws (15, 16), which can be inserted between the three cables (11a, 11b, 11c) and by means of which, in addition to the clamping surfaces (14b), an additional contact pressure can be generated on the two cables (11a, 11b) lying next to one another.

4. Clamp according to one of the preceding claims 1 to 3, whereby the half-shell-shaped lower or upper part (13, 14) and the associated clamping jaws (15, 16) are made of different materials.

5. Clamp according to one of the preceding claims 1 to 4, whereby the ducts (13a, 13b, 13c) are each provided with an insert adapted to the duct cross-section for the protection of the cable mantle.

6. Clamp according to one of the preceding claims 1 to 5, whereby shoulders (19) are provided in the lower part (13) of the clamping body (12) for the support of the clamp (10) on a foundation, support beam or suchlike.

## Revendications

1. Support pour porter des câbles, de préférence des câbles à haute tension, qui comprend une pièce (12) oblongue de serrage pour la réception de câbles (11a, 11b, 11c), dans lequel la pièce (12) oblongue de serrage, pourvue de trois canaux (13a, 13b, 14a) de passage formant en section transversale un triangle pour la réception des câbles (11a, 11b, 11c), a au moins une partie (13) inférieure et une partie (14) supérieure, dans lequel dans la partie (13) inférieure et dans la partie (14) supérieure est disposée respectivement une mâchoire (15, 16) de serrage, qui sont formées par paire pour l'immobilisation des câbles (11a, 11b, 11c) dans les canaux (13a, 13b, 14a) de passage de la pièce de serrage, dans lequel la partie (13) inférieure et la partie (14) supérieure ayant les mâchoires (15, 16) de serrage peuvent être bloquées l'une par rapport à l'autre par des moyens de fixation disposés des deux côtés, de préférence par des vis (18) de blocage, qui sont guidées des deux côtés des mâchoires de serrage par des pièces (17) rapportées en saillie latéralement, dans lequel les canaux (13a, 13b, 14a) de passage sont évidés par moitié et en hémi-cercle dans les mâchoires de serrage de la paire (15, 16) de mâchoires de serrage, dans lequel à la mâchoire (15) de serrage de la partie (13) inférieure sont associés deux canaux (13a, 13b) de passage tandis qu'à la mâchoire (16) de serrage de la partie (14) supérieure est associé le troisième canal (14a) de passage, dans lequel la mâchoire (16) de serrage de la partie (14) supérieure pénètre de préférence dans l'ouverture de la partie (13) inférieure et y est guidée latéralement.

2. Support suivant la revendication 1, dans lequel la mâchoire (16) de serrage de la partie (14) supérieure est conformée, en section transversale, de manière à prévoir en son centre le canal (14a) de passage du un câble (11c) et sur son côté inférieur des deux côtés outre ce canal (14a) de passage, respectivement une surface (14b) de blocage en forme de segment pour presser les deux autres câbles (11a, 11b) côte à côte dans la mâchoire (15) inférieure de serrage.

3. Support suivant la revendication 1 ou 2, dans lequel il y a entre les mâchoires (15, 16) de serrage un insert (20) longitudinal, qui peut être inséré entre les trois câbles (11a, 11b, 11c) et au moyen duquel il peut être produit, outre les surfaces (14b) de blocage, une pression d'application supplémentaire sur les deux câbles (11a, 11b) côte à côte.

4. Support suivant l'une des revendications 1 à 3 précédentes, dans lequel la partie (13, 14) inférieure ou supérieure en forme d'hémi coquille et les mâchoires (15, 16) de serrage, qui leur appartiennent, sont fabriquées en des matériaux différents.

5. Support suivant l'une des revendications 1 à 4 précédentes, dans lequel les canaux (13a, 13b, 13c) de passage sont pourvus respectivement d'un insert adapté à la section transversale du canal pour la protection de la gaine de câble.

6. Support suivant l'une des revendications 1 à 5 précédentes, dans lequel il est prévu dans la partie (13) inférieure de la pièce (12) de blocage des pièces (19) rapportées pour l'appui du support (10) sur un socle, un support d'appui ou analogue.
